# EUROPÄISCHE PATENTANMELDUNG

(11) **EP 2 233 271 A1**
(43) Veröffentlichungstag der Anmeldung: **29.09.2010**
(21) Anmeldenummer: 09004238.3
(22) Anmeldetag: 25.03.2009
(51) Int. Cl.: B29C 44/46, B05C 5/02

(54) **Sandwich-Verbundelemente**

(71) Anmelder: Bayer MaterialScience AG, 51368 Leverkusen (DE)
(72) Erfinder: Jung, Horst-Uwe, 50935 Köln (DE); Köster, Ralf, 51379 Leverkusen (DE)

(57) **Zusammenfassung**

Die Erfindung betrifft eine Vorrichtung zum gegebenenfalls gleichzeitigen und gegebenenfalls gleichmäßigen Auftrag aufschäumender Reaktionsgemische auf eine Substrat, ein Verfahren zur Herstellung aufschäumender Reaktionsgemische, eine Vorrichtung zur Herstellung von Sandwich-Verbundelementen sowie ein Verfahren zur Herstellung von geschäumten Sandwich-Verbundelementen.

## Beschreibung

Die Erfindung betrifft eine Vorrichtung zum gegebenenfalls gleichzeitigen und gegebenenfalls gleichmäßigen Auftrag aufschäumender Reaktionsgemische auf ein Substrat, ein Verfahren zur Herstellung aufschäumender Reaktionsgemische, eine Vorrichtung zur Herstellung von Sandwich-Verbundelementen sowie ein Verfahren zur Herstellung von geschäumten Sandwich-Verbundelementen.

Es besteht seit langem der Bedarf an Vorrichtungen für die kontinuierliche Herstellung von Sandwich-Verbundelementen bei hohen ProduktionsgeschwindigkeitenZur kontinuierlichen Herstellung von Sandwich-Verbundelementen sind bisher aus dem Stand der Technik oszillierende Mischköpfe bekannt. Hierbei führt der Mischkopf eine oszillierende Bewegung über die Breite einer unteren Deckschicht aus und trägt das noch flüssige Reaktionsgemisch mittels einer Gießharke oder Zungen-/Löffeldüse, die im rechten Winkel zum Mischkopf und parallel zu unteren Deckschicht angeordnet ist, auf die untere Deckschicht auf.

Der Mischkopf ist an einer Führungsschiene, dem so genannten Portal, über der unteren Deckschicht befestigt und wird mit Hilfe von Elektromotoren beschleunigt und vor den Umkehrpunkten abgebremst. Die Verschäumungs-Rohstoffe werden dem Mischkopf über Schlauchleitungen zugeführt. Des Weiteren führen teilweise Hydraulik- oder Pneumatikschläuche zum Mischkopf. Die Verschäumungs-Rohstoffe werden über Düsen in den Mischkopf eingebracht und vermischt.

Das Reaktionsgemisch fließt danach in die Gießharke und tritt an den regelmäßig angebrachten Bohrungen aus. Durch die Länge der Gießharke und deren Bohrungen, sowie der oszillierenden Bewegung des Mischkopfs, wird eine schräg zur Produktionsrichtung liegende Verteilung des Reaktionsgemisches erzielt.

Nach Aufbringung schäumt das Reaktionsgemisch auf und steigt bis zur oberen Deckschicht. Bei dem Aufschäumprozess verklebt es die beiden Deckschichten, bevor der Schaum erstarrt und aushärtet.

Dieses Produktionsverfahren ist fertigungstechnisch hinsichtlich der Produktionsgeschwindigkeit limitiert. Auch wenn ausreichend starke Motoren, Führungsschienen, Schläuche, Mischköpfe und Gießharken oder Zungen-/Löffeldüsen verwendet würden, würde das Reaktionsgemisch bedingt durch zu hohe Fliehkräfte an den Umkehrpunkten über die Kanten der Deckschichten hinausgetragen werden. Nach dem Stand der Technik können Produktionsgeschwindigkeiten von mehr als 15 m/min bei der kontinuierlichen Herstellung von Sandwich-Verbundelementen mit dieser Auftragstechnik nicht erreicht werden.

Hinlänglich bekannt ist die Technik, mittels stehender Mischkopftechnologie und starren Austrittsystemen die Produktionsgeschwindigkeit auf bis zu 60 m/min zu erhöhen. Dieses Verfahren wird US-Technologie genannt. Diese US-Technologie (Schnellläufer) besteht im Wesentlichen aus drei gleichen Dosierlinien mit separater Zuführung und separaten Mischköpfen und Austrittsystemen. Diese Technologie verfügt jedoch nicht über einen Verteilerkopf. Dieses Verfahren hat weiterhin den Nachteil, dass das jeweils austretende Reaktionsgemisch aus den einzelnen Mischköpfen auch unterschiedlichen physikalischen Bedingungen bezüglich Druck und Temperatur unterliegen kann, was sich im jeweiligen erhaltenen Schaum durch Produktqualitätsminderungen wie beispielsweise ungleichmäßige Oberfläche, kleinere Zellen, unterschiedliche Wärmeleitfähigkeitswerte aufgrund punktuell unterschiedlicher Reaktionskinetik, bemerkbar macht.

EP 1 857 248 A2 löst dieses Problem dadurch, dass nicht jede Austrittleitung über einen separaten Mischkopf verfügt. Vielmehr ist nur ein zentraler Mischkopf vorgesehen, über den mehrere Austrittleitungen gespeist werden.

WO 2008/018787 A1 betrifft eine Vorrichtung zum Auftragen eines viskosen Gemisches auf einer Oberfläche mittels einer oder mehrerer Auslassöffnungen, die durch ein Zufuhrelement gespeist werden. Die Schrift betrifft weiterhin ein Verfahren zur Herstellung eines Isolationselements mit den Schritten der Auftragung eines viskosen Gemisches, das einen Schaum auf einer Substratschicht bildet, wobei der Schaum anschließend vernetzt und gegebenenfalls die Schaumstoffschicht weiter beschichtet wird. Ein Mischkopf 3 wird mit Komponenten aus den Zuführungen 1 und 2 mit Rohstoffmaterial versorgt. Über eine starre Hauptleitung 8 wird über eine Unterverteilung 4 eine Giesharke 6 durch mehrere Zwischenstege 5 angesteuert. Die Giesharke ist somit starr mit dem Mischkopf verbunden, kann nur komplett mit dem Mischkopf nach links oder rechts bewegt werden um den Auftragsbereich im ganzen in die richtige Position zum Substrat justieren zu können. Darüber hinaus ist die Reinigung des Systems sehr aufwändig.

Im Hinblick auf diesen Stand der Technik besteht die Aufgabe der vorliegenden Erfindung darin, Vorrichtungen bzw. Verfahren zu entwickeln, mit welchen sich eine hohe Produktionsgeschwindigkeit bei geringer Schichtdicke erreichen lässt. Eine weitere Aufgabe liegt darin, die Oberfläche (vor allen Dingen hinsichtlich ihrer Homogenität) der mit solchen Vorrichtungen/Verfahren erhältlichen Schaumstoffe ebenso zu verbessern wie die oben definierten Produktqualitäten.

Diese Aufgabe wird in einer ersten Ausführungsform gelöst durch eine Vorrichtung zum Auftrag von aufschäumenden Reaktionsgemischen umfassend
(a) einen Mischkopf zum Vermischen von Rohmaterialien zur Herstellung des Schaums,
(b) einen strömungstechnisch hinter dem Mischkopf liegenden Verteilerkopf,
(c) mindestens drei an dem Verteilerkopf angebrachte Schlauchleitungen und
(d) mindestens drei stationäre Gießharken zum Auftragen des Gemischs der Rohmaterialien zur Schaumbildung auf ein bewegtes Substrat.

Wenn der Verteilerkopf in diesem Zusammenhang als hinter dem Mischkopf liegend beschrieben wird, so ist dies in Bezug auf die Strömungsrichtung des diese beiden Köpfe durchströmenden Materials zu verstehen: Es wird also zunächst der Mischkopf und dann erst der Verteilerkopf durchströmt.

Zur Verarbeitung des Rohstoffmaterials wird insbesondere ein inertes Gas ausgewählt aus der Gruppe von Luft, Stickstoff, Kohlendioxid und Edelgasen wie Argon und Helium. Bevorzugt wird Luft als chemisch inertes Gas eingesetzt.

Der Mischkopf kann je nach verwendeter Technologie (Hochdruck oder Niederdruck) als dynamischer Mischer oder als Statikmischer ausgebildet sein und dient insbesondere der innigen Vermischung der jeweiligen Komponente beziehungsweise des Gemisches mit dem unter erhöhtem Druck stehenden inerten Gas. Nach dem Eintrag des inerten Gases weisen die Komponenten auf ihrem Weg zum Verteilerkopf beziehungsweise weist das Gemisch der Komponenten auf seinem Weg zum Mischkopf einen erhöhten Druck auf, was eine erhöhte Austragsgeschwindigkeit des aufschäumenden Reaktionsgemisches bedingt. Darüber hinaus werden die oben genannten Produktqualitäten verbessert.

In einer weiteren bevorzugten Ausführungsform der vorliegenden Erfindung sind die Gießharken quer, insbesondere im 90° Winkel zur Produktionsrichtung des Substrats stationär angeordnet. Die stationäre Anordnung der Gießharke hat dabei den Vorteil, dass an den Kanten des Schaumauftrags keine gegenüber anderen Bereichen des Schaumauftrags veränderte Dichte vorliegt. Somit ist der Schaumauftrag kontinuierlich über die gesamte Breite des Substrats äußerst einheitlich.

Die Gießharken können dabei auch quer in Produktionsrichtung des Substrats versetzt angeordnet sein oder auf einer Linie nebeneinander liegen. Eine Überlappung der Gießharken kann bei versetzter Anordnung zu einem längenmäßigen Auftragungsgradienten mit stufenförmigem Muster führen.

Die im Sinne der vorliegenden Erfindung bevorzugt eingesetzten Giesharken weisen im Inneren einen konischen Strömungsquerschnitt auf, der sich vom Eintritt des Reaktionsgemisches hin zu der am weitesten entfernt liegenden Bohrung verjüngt, so dass der Strömungsdruck vor den Austrittsöffnungen ausgeglichen werden kann.

Analog dem Stand der Technik weisen die erfindungsgemäß eingesetzten Gießharken im Bereich der Austrittsöffnung des Schaum jeweils vorzugsweise einen konischen Innenquerschnitt auf. Damit entsprechen die Gießharken im Wesentlichen an sich bekannten Einweggießharken, die bisher im Stand der Technik für die oszillierende Auftragungsweise eingesetzt wurden.

In einer zweiten Ausführungsform wird die der Erfindung zugrunde liegende Aufgabe gelöst durch ein Verfahren zur Herstellung von aufschäumenden Reaktionsgemischen durch Einsatz einer erfindungsgemäßen Vorrichtung.

Vorzugsweise setzt man als Komponente A eine Isocyanat-Komponente ein. Als Komponente B setzt man bevorzugt eine Polyol-Komponente ein. In diesem Zusammenhang schließen die Begriffe "Isocyanat-Komponente" bzw. "Polyol-Komponente" auch Gemische verschiedener Isocyanate bzw. Polyole mit ein. Somit werden Polyurethanschaumstoffe erhalten. In Gegenwart bestimmter Aktivatoren können Isocyanate auch miteinander reagieren und Makromoleküle mit Isocyanuratstrukturen (Polyisocyanurate = PIR) bilden. Da die Reaktionen von Isocyanaten mit Polyolen und Isocyanate gleichzeitig oder in unmittelbarer Folge ablaufen können, erhält man Makromoleküle mit Urethan- und Isocyanuratstrukturen (PIR - PUR).

Bevorzugt ordnet man bei dem erfindungsgemäßen Verfahren die Gießharken so an, dass das ausströmende aufschäumende Reaktionsgemisch in die Produktionsrichtung des Substrats (Bewegungsrichtung des Substrats) auf eine untere Deckschicht aufgetragen wird.

Alternativ befestigt man bei dem erfindungsgemäßen Verfahren die Gießharken so, dass das ausströmende aufschäumende Reaktionsgemisch gegen die Produktionsrichtung des Substrats auf eine untere Deckschicht aufgetragen wird.

In beiden Fällen wird dies durch eine entsprechende Neigung der Gießharken erreicht.

Eine weitere bevorzugte Ausführungsform der vorliegenden Erfindung besteht darin, dass die Vorrichtung mindestens drei, insbesondere vier am Verteilerkopf angebrachte, gleichlange und aus gleichem Material bestehende Schlauchleitungen gleichen Querschnitts umfasst. Damit wird gewährleistet, dass in die jeweiligen Gießharken (mindesten drei, insbesondere vier) die gleiche Menge an Rohmaterial pro Zeit eingebracht und damit auch auf das Substrat aufgebracht wird.

In einer weiteren Ausführungsform wird die der Erfindung zugrunde liegende Aufgabe gelöst durch eine Vorrichtung zur Herstellung von Sandwich-Verbundelementen umfassend wenigstens zwei Zuführvorrichtungen für jeweils eine obere und eine untere Deckschicht, ein umlaufendes Oberband zur Führung der oberen Deckschicht und ein umlaufendes Unterband zur Führung der unteren Deckschicht, an die eine erfindungsgemäße Vorrichtung, eine Formstrecke und eine Ablängvorrichtung hintereinander angeordnet sind.

In einer vierten Ausführungsform wird die der Erfindung zugrundeliegende Aufgabe gelöst durch ein Verfahren zur Herstellung von geschäumten Sandwich-Verbundelementen, wobei man eine erfindungsgemäße Vorrichtung zur Herstellung von Sandwich-Verbundelementen einsetzt.

Bei der erfindungsgemäßen Vorrichtung ist vorzugsweise ein Mischkopf oberhalb der unteren Deckschicht an einem starren Gestell angebracht, so dass unterschiedliche Reaktionsprofile zur Herstellung von unterschiedlich dicken Produkten möglich sind. An den Mischkopf, in dem die einzelnen Verschäumungs-Komponenten zusammen gemischt werden, ist ein Verteilerkopf befestigt. Dieser Verteilerkopf besitzt beispielsweise wenigstens 3, insbesondere 4, maximal 8 Schlauchleitungen, deren Länge, Querschnitt und Material bevorzugt alle gleich sind. Dies hat den Vorteil, dass das Schaumverhalten des noch flüssigen Reaktionsgemischs beim späteren Auftreffen auf die untere Deckschicht an jedem Auftreffpunkt gleich weit fortgeschritten ist, was zu einer besonders einheitlichen Verschäumung des hergestellten Produktes führt. Dieser Vorteil wird nicht nur durch die gleiche Länge, Querschnitt und Material der Schlauchleitungen begünstigt, sondern auch dadurch, dass das gesamte aufzutragende Gemisch aus ein und demselben Mischkopf austritt. Als Schlauchleitung kann jedes dem Fachmann bekannte Material genutzt werden, das nicht mit dem zu schäumendem Reaktionsgemisch reagiert und an dem das Reaktionsgemisch nicht unverhältnismäßig stark haftet. Bevorzugt ist das Material der Schlauchleitung ausgewählt aus der Gruppe von Polyethylen (PE), Polypropylen (PP), Polyvinylchlorid (PVC), Polyethylenterephthalat (PET), Kautschuk, Polytetrafluorethylen (PTFE) und Polyurethan (PU). Als Kautschuk ist jeder dem Fachmann bekannte in Zuleitungen verarbeitbare flexible Kautschuk zu verstehen, bevorzugt ist Nitril-Butadien-Kautschuk (NBR). Besonders bevorzugt ist ein biegsames Material ausgewählt aus der Gruppe von PE, PP, PET und PVC. Die Schlauchleitungen können an einem in Querrichtung zur Produktionsrichtung des Transportbandes über der oberen Deckschicht angeordneten, starren Gestell angeordnet und fixiert sein, dass sie die Gießharken optimal mit dem Reaktionsgemisch versorgen und ein über die Breite der unteren Deckschicht gleichmäßiger Auftrag gewährleistet ist. Vorteilhaft sind die Schlauchleitungen und die Gießharken über der unteren Deckschicht angeordnet, dass das Reaktionsgemisch auf die untere Deckschicht aufgebracht wird, dass keine nicht benetzten Bereiche zwischen den einzelnen Auftragsbereichen der jeweiligen Gießharken auf der unteren Deckschicht auftreten.

Die Austragsgeschwindigkeit aus den Gießharken beträgt insbesondere 1 bis 5 m/sec. In einer besonderen Ausführung kann der Mischkopf wie auch der Verteilerkopf samt der Schlauchleitungen so angeordnet und fixiert werden, dass auch Produkte mit einer in Querrichtung zur Produktionsrichtung des Transportbandes abfallenden Dicke oder mit sich ständig ändernden Dickenverhältnissen hergestellt werden können. Dies kann im Wesentlichen durch entsprechende Konfiguration der Gießharken erreicht werden. Während des Aufschäumens schließen sich diese Lücken zwischen den Bohrungen, so dass ein in gewünschter Weise unregelmäßiges Ausschäumen in der Höhe der Produkte ermöglicht wird.

Durch diese Art der Anordnung kann auf ein Portal wie es bei der oszillierenden Gießharke bzw. Zungen-/Löffeldüse zwingend notwendig ist, verzichtet werden. Des Weiteren sind mit dieser Anordnung die Produktionsgeschwindigkeiten nur noch von der Geschwindigkeit des Transportbandes oder der Austragsleistung der Verschäumungsmaschine sowie der Querschnitt der Bohrungen der Gießharken abhängig. Ein weiterer Vorteil dieser erfindungsgemäßen Vorrichtung gegenüber Verfahren, die mehrere Mischköpfe einsetzen müssen, ist der, dass durch die Verwendung von nur einem Mischkopf keine Schwankungen durch unterschiedliche Verarbeitungsdrücke, Temperaturen, oder ähnliches, wodurch die Produktionssicherheit und Produktqualität erniedrigt wird, auftreten können.

Als Mischkopf für die erfindungsgemäße Vorrichtung kann jeder im Stand der Technik bekannte Mischkopf eingesetzt werden. Diese müssen jedoch zur Verschäumung insbesondere von Polyol-komponente und Isocyanatkomponente für die Herstellung von Polyurethan-Sandwich-Verbundelementen geeignet sein. Das chemisch inerte Gas kann dem Reaktionsgemisch im Mischkopf oder einer oder beiden Reaktionskomponenten bereits vorher zugemischt werden, um eine mögliche Verstopfung der Schlauchleitungen zu verhindern. Das chemisch inerte Gas ist ausgewählt aus der Gruppe von Stickstoff, Luft, Kohlendioxid und Edelgasen wie Argon und Helium. Anstatt eines Gases können auch andere Bestandteile den Reaktionskomponenten hinzugemischt werden. Diese Stoffe sind beispielhaft ausgewählt aus der Gruppe von Graphit, Polyurethanmehl, Melamin, Quarzsand, Al₂O₃, Talkum und Nanokomposite wie beispielsweise Schichtsilicate, Nanotubes, Nanosand und werden den Reaktionskomponenten insbesondere im Mischkopf zugegeben.

Das Material des Verteilerkopfes kann aus dem gleichen Material wie die Gießharken ausgewählt sein, insbesondere aus Stahl, Edelstahl, Aluminium und Kunststoffen. In jedem Fall muss dass ausgewählte Material den im Mischkopf herrschenden üblichen Drücken und Temperaturen im Bereich von 20 bis 40 °C standhalten. Die Geometrie des Verteilerkopfes ist bevorzugt so gewählt, dass die Wegstrecke vom Eingang des Verteilers bis zu den jeweiligen Ausgängen der Schlauchleitungen hin zu den Bohrungen der Gießharken gleichlang ist. Des Weiteren ist es vorteilhaft, wenn der Querschnitt der Verteilerkopfausgänge bei allen Verteilerkopfausgängen identisch ist. Der Querschnitt des Verteilerkopfeingangs kann dagegen auch größer sein als die jeweiligen Verteilerkopfausgänge.

Die erfindungsgemäße Auftragsvorrichtung kann Bestandteil einer weiteren Vorrichtung sein, die zur Herstellung von Sandwich-Verbundelementen eingesetzt wird. Die Herstellung von Polyurethan-Sandwichelementen (Panels) erfolgt im Allgemeinen in einem kontinuierlichen Prozess. Dabei werden die Panels endlos auf so genannten Doppel-Transportbändern in Dicken von in der Regel ca. 20 bis 240 mm hergestellt. Dicken von unter 20 mm und über 240 mm sind aber ebenfalls möglich. Ein solches Doppel-Transportband besteht dabei üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht.

Die Anordnung der einzelnen Elemente für ein kontinuierliches Herstellungsverfahren für Sandwich-Verbundelemente ist aus dem Stand der Technik, wie in DE 1 247 612 A1 und DE 1 609 668 A1 beschrieben, bekannt.

Im Rahmen der vorliegenden Erfindung wird unter einem Sandwich-Verbundelement ein Verbundelement verstanden, welches wenigstens aus zwei Deckschichten und einer dazwischen liegenden Kernschicht aufgebaut ist.

Als Kernschicht können alle dem Fachmann bekannten Materialien eingesetzt werden. Bevorzugt sind Faserplatten aus Mineralfasern oder Platten aus Hartschaumstoff, wie beispielsweise Polyurethan- oder Polyisocyanurat (PIR)-Hartschaumstoff, Polystyrolschaumstoff, Phenolharzschaumstoff.

Im Besonderen bestehen Sandwich-Verbundelemente wenigstens aus zwei Deckschichten aus starren oder flexiblen Material und einer Kernschicht aus einem Schaumstoff wie beispielsweise einem PUR-Hartschaumstoff. Hierbei sind unter PUR Hartschaumstoffe solche Hartschaumstoffe zu verstehen, die auf Polyurethan-, Polyharnstoff- als auch Polyisocyanuratverbindungen basieren.

Als Kernschicht werden bevorzugt Hartschaumstoffe, auf Basis von Polyurethan und/oder Polyisocyanurat, gewählt. Zur Herstellung von Polyurethan- und/oder Polyisocyanuratgruppen aufweisenden Hartschaumstoffen können als Ausgangskomponenten alle dem Fachmann bekannten Verbindungen mit gegenüber OH-Verbindungen reaktiven NCO-haltigen Verbindungen wie a) aliphatischen, cycloaliphatischen, araliphatischen, aromatischen und heterocyclischen Polyisocyanate, bevorzugt Diphenylmethandiisocyanat (MDI) oder Polyphenylpolymethylenpolyisocyanate, Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und b) Verbindungen mit mindestens zwei gegenüber Isocyanaten reaktiven Wasserstoffatomen mit einem Molekulargewicht im Bereich von 400 bis 10.000 g/mol, wie beispielsweise Aminogruppen, Thiolgruppen, Hydroxylgruppen oder Carboxylgruppen aufweisende Verbindungen eingesetzt werden.

Darüber hinaus ist die Verwendung von geeigneten NCO-Präpolymeren, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000 möglich.

Die Herstellung der Schaumstoffe erfolgt unter Verwendung von üblichen, dem Fachmann bekannten Hilfs- und Zusatzstoffen wie Katalysatoren, Treibmitteln, Vernetzern, Flammschutzmitteln Schaumstabilisatoren, Fließverbesserern, Inhibitoren, sowie gegebenenfalls festen Additiven zur Verbesserung der Wärmeleitfähigkeit und des Flammschutzes.

Als Materialien für die Deckschichten können alle dem Fachmann bekannten Materialien eingesetzt werden. Bevorzugt sind Metalle wie Stahl (verzinkt und/oder lackiert), Aluminium (lackiert und/oder eloxiert), Kupfer, Edelstahl oder Nichtmetalle wie verstärkte, unverstärkte und/oder gefüllte Kunststoffe, wie beispielsweise Polyvinylchlorid oder auf Polyesterbasis oder Glasfasern, imprägnierte Pappe, Papier, Holz, Bitumenglasvlies und mineralisches Glasvlies.

Beispielsweise können die Deckschichten mit einem Lack beschichtet sein.

Auch Kombinationen der Deckschichten auf den jeweiligen Seiten des hergestellten Panels aus den zuvor genannten Werkstoffen sind als Deckschichten geeignet.

Derartige Verbundelemente auf Basis von unterschiedlichen Deckschichten (starr oder flexibel) und einer Kernschicht aus Polyurethan-Hartschaumstoff sind aus dem Stand der Technik hinlänglich bekannt und werden auch als Metallverbundelemente oder Dämmplatte bezeichnet. Zwischen der Kernschicht und den Deckschichten können weitere Schichten vorgesehen sein.

Beispiele für die Anwendung solcher Verbundelemente mit starren Deckschichten sind ebene oder linierte Wandelemente sowie profilierte Dachelemente für den Industriehallenbau und Kühlhausbau. Auch finden die Verbundelemente als LKW-Aufbauten, Hallentüren und Tore sowie im Containerbau Einsatz. Dämmplatten sowie Verbundelemente mit flexiblen Deckschichten finden Einsatz als Dämmmaterialien von Dächern, Außenwänden und als Fußbodenplatten.

Die Herstellung dieser Verbundelemente nach einem kontinuierlichen oder diskontinuierlichen Verfahren ist aus dem Stand der Technik hinlänglich bekannt. Hierfür wird das noch flüssige Reaktionsgemisch auf die untere Deckschicht (Substrat) mittels der erfindungsgemäßen Vorrichtung aufgetragen. Das nun langsam aufschäumende Reaktionsgemisch wird auf der unteren Deckschicht mittels eines Unterbandes in die Formstrecke, die von einem Ober- und Unterband aufgespannt wird, transportiert. Das aufschäumende Reaktionsgemisch erreicht die obere Deckschicht und verklebt somit die beiden Deckschichten miteinander. Innerhalb der Formstrecke, wobei das Ober- und Unterband die Dicke des herzustellenden Produktes vorgibt, verfestigt sich der Schaum und wird nach Durchlauf durch die Formstrecke über eine Ablängvorrichtung, zum Schneiden der so hergestellten Panels in gewünschte Längen, abgelängt.

## Patentansprüche

1. Vorrichtung zum Auftrag von aufschäumenden Reaktionsgemischen umfassend
(a) einen Mischkopf zum Vermischen von Rohmaterialien zur Herstellung des Schaums,
(b) einen strömungstechnisch hinter dem Mischkopf liegenden Verteilerkopf,
(c) mindestens drei an dem Verteilerkopf angebrachte Schlauchleitungen und
(d) mindestens drei stationäre Gießharken zum Auftragen des Gemischs der Rohmaterialien zur Schaumbildung auf ein bewegtes Substrat.

2. Vorrichtung nach Anspruch 1, **dadurch gekennzeichnet, dass** die Gießharken quer zur Produktionsrichtung des Substrats angeordnet sind.

3. Vorrichtung nach Anspruch 1 oder 2, **dadurch gekennzeichnet, dass** die Gießharken quer in Produktionsrichtung des Substrat versetzt angeordnet sind.

4. Vorrichtung nach einem der Ansprüche 1 bis 3, **dadurch gekennzeichnet, dass** die Gießharken quer zur Produktionsrichtung auf einer Linie nebeneinander liegen.

5. Vorrichtung nach einem der Ansprüche 1 bis 4, **dadurch gekennzeichnet, dass** die Gießharken im Bereich der Austrittsöffnung des Schaums einen konischen Innenquerschnitt aufweisen.

6. Vorrichtung nach einem der Ansprüche 1 bis 5, **dadurch gekennzeichnet, dass** die Gießharken im Inneren einen konischen Querschnitt ausgehend von dem Eintritt des Reaktionsgemischs hin zu der am weitesten entferntesten Bohrung aufweisen.

7. Vorrichtung nach einem der Ansprüche 1 bis 6, **dadurch gekennzeichnet, dass** sie mindestens drei, insbesondere vier am Verteilerkopf angebrachte, gleichlange und aus gleichem Material bestehende Schlauchleitungen gleichen Querschnitts umfasst.

8. Verfahren zur Herstellung von aufschäumenden Reaktionsgemischen durch Einsatz einer Vorrichtung nach einem der Ansprüche 1 bis 7.

9. Verfahren nach Anspruch 8, **dadurch gekennzeichnet, dass** man als Rohmaterial für den Schaumstoff eine Komponente A, insbesondere eine Isocyanat-Komponente einsetzt.

10. Verfahren nach Anspruch 8 oder 9, **dadurch gekennzeichnet, dass** man als Rohmaterial für den Schaumstoff eine Komponente B, insbesondere eine Polyol-Komponente einsetzt.

11. Vorrichtung zur Herstellung von Sandwich-Verbundelementen umfassend wenigstens zwei Zuführvorrichtungen für eine obere und eine untere Deckschicht, ein umlaufendes Oberband zur Führung der oberen Deckschicht und ein umlaufendes Unterband zur Führung der unteren Deckschicht, an die eine Vorrichtung nach einem der Ansprüche 1 bis 7, eine Formstrecke und eine Ablängevorrichtung hintereinander angeordnet sind.

12. Verfahren zur Herstellung von geschäumten Sandwich-Verbundelementen, wobei man eine Vorrichtung nach Anspruch 11 einsetzt.
